# FASCICULE DE BREVET EUROPEEN

(11) **EP 2 238 579 B1**
(45) Date de publication et mention de la délivrance du brevet: **19.06.2019**
(21) Numéro de dépôt: 09707696.2
(22) Date de dépôt: 30.01.2009
(51) Int. Cl.: G08B 13/196, H04N 7/18

(54) **SYSTÈME DE SURVEILLANCE COMPORTANT UN GRAND NOMBRE DE CAMERAS**
ÜBERWACHUNGSSYSTEM MIT VIELEN KAMERAS
SURVEILLANCE SYSTEM COMPRISING A LARGE NUMBER OF CAMERAS

(30) Priorité: 06.02.2008 FR 0850762
(43) Date de publication de la demande: 13.10.2010
(73) Titulaire: Airbus Defence and Space SAS, 31402 Toulouse Cedex 4 (FR)
(72) Inventeur: CHROBOCINSKI, Philippe, 94220 Charenton (FR); VARANGOT, Guilhem, 75014 Paris (FR); PERLANT, Frédéric, 75014 Paris (FR)
(74) Mandataire: Cabinet Le Guen Maillet
(86) Numéro de dépôt international: PCT/FR2009/050139
(87) Numéro de publication internationale: WO 2009/098426

(56) Documents cités:
- EP-A- 0 496 607
- WO-A-2006/049501

## Description

La présente invention concerne un système de surveillance comportant plusieurs détecteurs vidéo et des moyens d'agrégation centraux comportant des moyens de visualisation et d'analyse d'images provenant d'un ou plusieurs des détecteurs vidéo.

Dans le domaine des systèmes de surveillance utilisant des détecteurs vidéo, ou caméras vidéo, on connait deux types d'architecture en fonction du type d'utilisateurs et des contraintes d'utilisation.

Pour la surveillance sécuritaire de zones, un grand nombre de caméras, pouvant être groupées autour de plusieurs noeuds, sont connectées à une pièce de commande ou un poste central de sécurité. Les opérateurs peuvent piloter à distance les caméras mobiles et afficher les images reçues sur plusieurs écrans. En règle générale, il y a un écran par caméra avec des possibilités de basculement entre plusieurs caméras. Ce type de système a l'inconvénient de nécessiter un grand nombre d'opérateurs pour exploiter l'information. De plus, la fiabilité du système dépend largement de l'attention humaine des opérateurs et de leurs capacités d'analyse. Parfois les images reçues sont stockées pour une analyse ultérieure éventuelle, ce stockage étant le plus souvent réalisé sans ajout de métadonnées pour faciliter la recherche.

Le second type de système de surveillance est utilisé dans le but d'empêcher les intrusions sur un site. Les images des caméras sont alors traitées localement, au plus près de la caméra, pour générer des alarmes. Ces alarmes sont centralisées dans un poste central de sécurité. Ce type de système remplit deux fonctions : afficher l'alarme et donner accès aux informations des capteurs.

Ces systèmes sont limités dans le nombre de caméras qu'ils peuvent gérer. En effet, dans un système comportant plusieurs centaines ou milliers de caméras, sans compter d'autres types de capteurs, les équipes de surveillance au niveau central deviennent vite trop importantes et cela crée des problèmes de coordination ou bien les opérateurs sont submergés par le nombre d'information à surveiller et traiter.

Ainsi, il serait particulièrement avantageux d'avoir un système de surveillance capable de gérer de très nombreuses caméras tout en limitant le nombre et la complexité des tâches des opérateurs.

Il est connu du document de brevet EP 0496607 A1 un système de surveillance dans lequel des stations surveillées sont connectées à une station centrale par le biais de lignes téléphoniques via lesquels les stations surveillées envoient à la station centrale des données vidéo sous forme compressée.

Il est aussi connu du document de brevet WO 2006/049501 A1 un système de de surveillance comportant un organe de contrôle central connecté grâce à un réseau de communication préférentiellement sans-fil à une pluralité de sources vidéo comportant des moyens de traitement vidéo, pour permettre à l'organe de contrôle central de commander les sources vidéo et contrôler les flux vidéo issus de ces sources vidéo.

Aussi, un premier objet de l'invention est un système de surveillance selon la revendication 1.

D'autres caractéristiques et modes de réalisation de cet objet sont indiqués ci dessous :
- les moyens d'agrégation intermédiaires comportent des moyens de commande des détecteurs vidéo du sous ensemble de détecteurs vidéo adaptés pour diffuser les commandes reçues des moyens de commande des moyens d'agrégation centraux vers les détecteurs vidéo ;
- les moyens d'agrégation intermédiaires sont adaptés pour ne transmettre des images aux moyens d'agrégation centraux que sur requête desdits moyens d'agrégation centraux ou en relation avec ladite alarme :
- il comporte en outre des moyens d'agrégation locaux associés à un des détecteurs vidéo et comportant des moyens d'analyse des images dudit détecteur et des moyens de commande dudit détecteur ;
- les moyens d'agrégation locaux comportent en outre des moyens d'interface avec au moins un capteur non vidéo et qu'ils sont adaptés pour transmettre des images dudit détecteur vidéo aux moyens d'agrégation intermédiaires en réponse à un événement détecté par au moins un desdits capteurs non vidéo ;

- les moyens d'analyse des moyens d'agrégation locaux sont adaptés pour envoyer une alarme aux moyens d'agrégation intermédiaires ;
- l'alarme est retransmise aux moyens d'agrégation centraux par les moyens d'agrégation intermédiaires ;
- des moyens d'agrégation locaux sont connectés à au moins deux moyens d'agrégation intermédiaires ;
- des moyens d'agrégation intermédiaires sont mis en réserve pour permettre une configuration dynamique de la hiérarchie des liens entre les moyens d'agrégation locaux, intermédiaires et centraux.

L'invention sera mieux comprise à la lecture de la description de modes de réalisation qui suivent, donnés uniquement à titre d'exemple, et faits en référence aux dessins en annexe dans lesquels :
- la Fig. 1 est une vue schématique d'un système de surveillance selon un mode de réalisation de l'invention ;
- la Fig. 2 est une vue schématique de moyens d'agrégation locaux du système de surveillance de la Fig. 1 ;
- la Fig. 3 est une vue schématique de moyens d'agrégation intermédiaires du système de surveillance de la Fig. 1 ; et
- la Fig. 4 est une vue schématique de moyens d'agrégation centraux du système de surveillance de la Fig. 1.

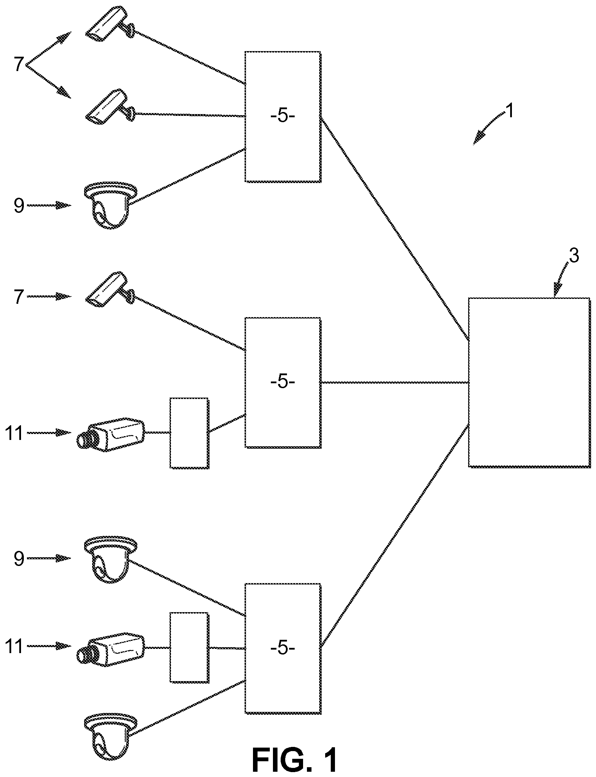

En référence à la Fig. 1, un système de surveillance 1 comporte des moyens 3 d'agrégation centraux connectés à des moyens 5 d'agrégation intermédiaires. Les moyens 5 d'agrégation intermédiaires sont connectés à des caméras fixes 7, des caméras motorisées 9 capables de surveiller une zone large à partir d'un point fixe grâce à une motorisation en rotation et des caméras intelligentes 11.

D'autres types de caméras sont également connectables au système de surveillance 1 comme, par exemple, des caméras mobiles fixées à des drones, des véhicules ou des personnels, des caméras équipant des téléphones mobiles, etc.

Les caméras peuvent également fonctionner dans différentes longueurs d'onde. Par exemple, certaines caméras fonctionnent dans l'infrarouge et d'autres dans la lumière visible.

Les connexions entre les différents éléments du système de surveillance 1 sont, de préférence, basées sur des protocoles de transfert de données numériques. Selon la configuration, elles utilisent différents supports physiques tels que, par exemple, les lignes électriques, la fibre optique et/ou les ondes radioélectriques.

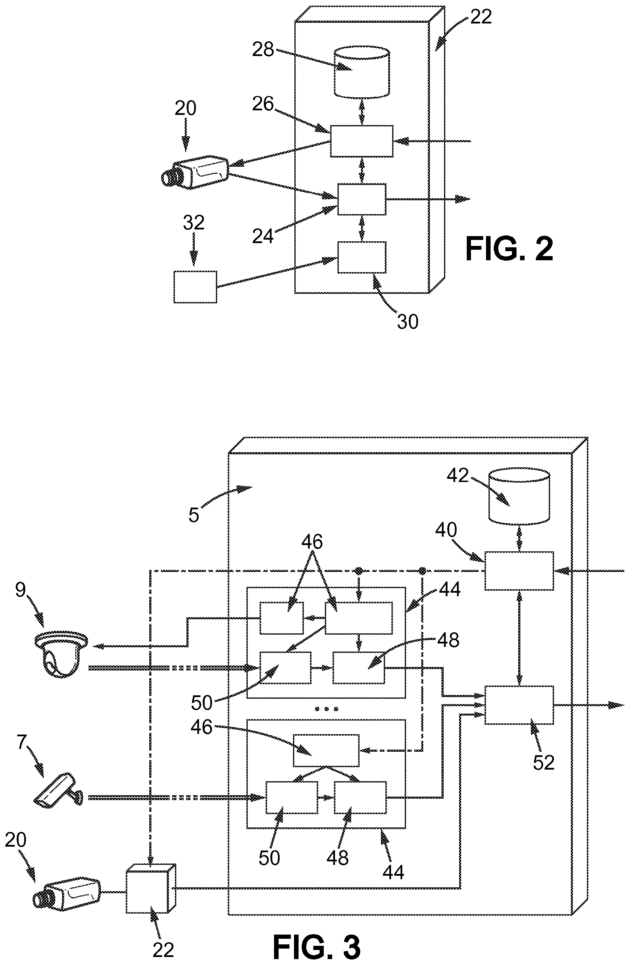

Une caméra intelligente 11 comporte, Fig. 2, une caméra 20 proprement dite et des moyens d'agrégation locaux 22.

Les moyens d'agrégation locaux 22 comportent des moyens 24 d'analyse des images générées par la caméra 20 ainsi que des moyens 26 de commande de celle-ci.

Les moyens 26 de commande sont connectés à une base de données 28 contenant les paramètres caractéristiques de la caméra 20 et reçoivent des ordres de commande des moyens 5 d'agrégation intermédiaires.

Pour optimiser l'autonomie et l'analyse locale des images, les moyens 22 d'agrégation locaux comportent également des moyens 30 d'interface avec des capteurs 32 non vidéo, par exemple des capteurs sismiques. Ainsi, les moyens 24 d'analyse sont capables de sélectionner un traitement vidéo spécifique en fonction d'événements qui ne sont pas détectables, ou difficilement, par des algorithmes d'analyse de scène.

La construction des boitiers des caméras et autres capteurs ainsi que ceux des moyens 22 d'agrégation locaux sont optimisés pour des contraintes environnementales pouvant être difficiles telles qu'une consommation électrique faible, un facteur de forme réduite, une grande résistance aux chocs, aux vibrations, à la température et aux interférences électromagnétiques.

Les moyens 5 d'agrégation intermédiaires comportent, Fig. 3, des moyens 40 de commande d'un ensemble de caméras 7, 9, 20 se basant sur une base de données 42 contenant des caractéristiques de ces caméras.

Les moyens 40 de commande communiquent les ordres de commande aux moyens 22 d'agrégation locaux pour la caméra 20 et à des moyens 44 de commande spécifiques à une caméra donnée.

Les moyens 44 de commande spécifiques sont similaires aux moyens 22 d'agrégation locaux en ce qu'il comportent également des moyens 46 de commande de la caméra et des moyens 48 d'analyse des images. Ils comportent également des moyens 50 d'encodage des images reçues de la caméra correspondante.

Les moyens 5 d'agrégation intermédiaires comportent en outre des moyens 52 de fusion capables d'intégrer les analyses d'images en provenance d'au moins deux caméras pour déclencher une alarme en direction des moyens 3 d'agrégation centraux.

Un exemple simple de fusion consiste à traiter les images de deux caméras distantes ayant un champ de vision parallèle pour reconstruire une image stéréoscopique permettant de détecter des événements particuliers.

Un autre exemple consiste à suivre le mouvement d'un individu ou d'un objet en déplacement à travers une succession de caméras qui signalent un mouvement.

Certaines alarmes générées, en particulier, par des moyens d'agrégation locaux 22 sont remontées directement aux moyens 3 d'agrégation centraux.

Les moyens 5 d'agrégation intermédiaires reçoivent les ordres des moyens 3 d'agrégation centraux et lui envoient des alarmes et des images via les moyens 52 de fusion.

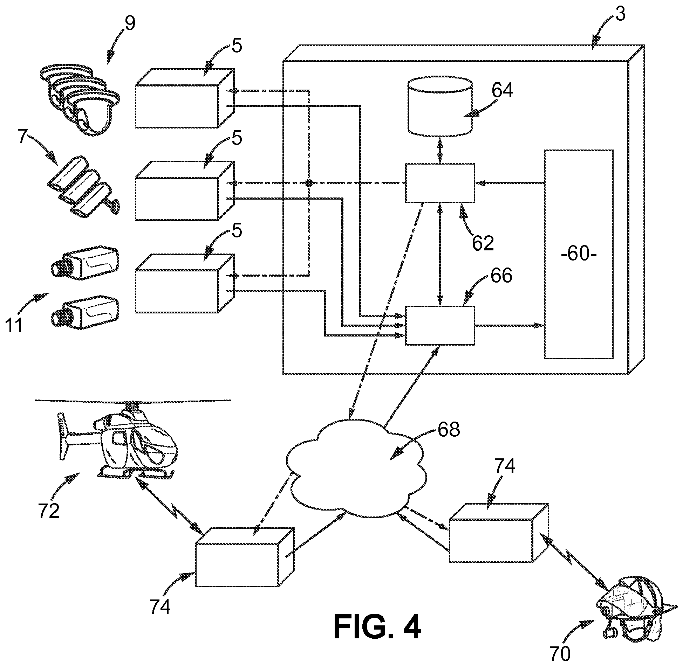

Les moyens 3 d'agrégation centraux comportent, Figure 4, un poste central de commande 60 comportant des moyens de visualisation et de commande permettant aux opérateurs du système d'agir.

Les ordres des opérateurs sont transmis aux moyens 5 d'agrégation intermédiaires par un moyen 62 de commande connecté à une base de données 64 du parc des caméras vidéo du système.

Les alarmes et images analysées en provenance des moyens 5 d'agrégation intermédiaires sont synthétisées par des moyens 66 de fusion avant d'être présentées aux opérateurs.

Les moyens 3 d'agrégation centraux comportent également des connexions avec un réseau de données externe 68 permettant de recueillir des informations en provenance d'autres caméras mobiles 70, 72 via des unités de traitement 74 adaptées.

Le système de surveillance décrit supporte deux modes principaux de fonctionnement pour assurer la détection des alarmes et les opérations en réaction : un mode « montant » (en anglais « push mode » ou « bottom-up approach ») et un mode « descendant » (en anglais « pull mode » ou « top-down approach »).

Le mode «montant» est utilisé pour minimiser la quantité d'informations remontée des caméras vers le poste central de sécurité. En effet, vu le très grand nombre d'images produites par les nombreuses caméras, il n'est pas possible de toutes les transmettre au poste central de sécurité. Il n'est même pas nécessaire de toutes les remonter dans la mesure où les opérateurs ne sont pas capables d'analyser un trop grand nombre d'images vidéo. Seul un sous ensemble d'images vidéo sélectionnées est transmis au poste central de sécurité.

L'information qui est transmise au poste central de sécurité est d'abord composée d'alarmes permettant aux opérateurs de focaliser leur attention sur un événement.

Les alarmes qui peuvent être générées par analyse d'images sont, par exemple, des informations d'état, des informations de changement ou des informations de foule.

Dans ce mode de fonctionnement, les moyens 62 de commande ordonnent aux niveaux inférieurs d'opérer dans un mode de surveillance et d'alarme.

Le mode « descendant » est utilisé pour permettre à un opérateur de se focaliser sur une zone spécifique, sur un objet à suivre ou sur des changements. L'opérateur sélectionne alors les opérations à effectuer et les zones d'intérêt. Les moyens 62 de commande au niveau central sélectionnent les caméras concernées, leur envoient des ordres de fonctionnement. Les résultats de ces opérations sont collectés par les différents moyens d'analyse et fusionnés pour fournir à l'opérateur une vue synthétique correspondant à son besoin.

Par exemple, des moyens d'agrégation intermédiaires peuvent être en réserve et être configurés dynamiquement en fonction des besoins.

De plus, un capteur ou un moyen d'agrégation local peut être connecté à plusieurs moyens d'agrégation intermédiaires.

De même, le niveau d'agrégation intermédiaire peut être structuré pour effectuer des regroupements de plusieurs types géographiques ou fonctionnels.

## Revendications

1. Système de surveillance comportant plusieurs détecteurs vidéo (7, 9, 11) et des moyens (3) d'agrégation centraux comportant des moyens (62) de commande des détecteurs vidéo et des moyens (60) de visualisation d'images provenant d'un ou de plusieurs des détecteurs vidéo, le système de surveillance comportant en outre des moyens (22) d'agrégation locaux associés à un des détecteurs vidéo (11), les moyens (22) d'agrégation locaux comportant des moyens (26) de commande dudit détecteur,
**caractérisé en ce que** les moyens (3) d'agrégation centraux comportant des moyens (66) d'analyse des images provenant d'un ou de plusieurs des détecteurs vidéo,
**en ce que** le système de surveillance comporte en outre
des moyens (5) d'agrégation intermédiaires connectés à un sous-ensemble des détecteurs vidéo et aux moyens d'agrégation centraux et comportant des moyens (52) de fusion adaptés pour analyser les images d'au moins deux détecteurs vidéo du sous-ensemble de détecteurs vidéo et pour déclencher une alarme vers les moyens d'agrégation centraux en fonction du résultat de ladite analyse,
**en ce que** les moyens (22) d'agrégation locaux comportent des moyens (24) d'analyse des images dudit détecteur adaptés pour envoyer une alarme aux moyens d'agrégation intermédiaires, et **en ce que** ladite alarme est retransmise aux moyens d'agrégation centraux par les moyens d'agrégation intermédiaires.

2. Système selon la revendication 1, **caractérisé en ce que** les moyens (5) d'agrégation intermédiaires comportent en outre des moyens (40, 46) de commande des détecteurs vidéo du sous ensemble de détecteurs vidéo adaptés pour diffuser les commandes reçues des moyens de commande (62) des moyens d'agrégation centraux (3) vers les détecteurs vidéo.

3. Système selon la revendication 1 ou 2, **caractérisé en ce que** les moyens (5) d'agrégation intermédiaires sont adaptés pour ne transmettre des images aux moyens (3) d'agrégation centraux que sur requête desdits moyens d'agrégation centraux ou en relation avec ladite alarme.

4. Système selon l'une quelconque des revendications 1 à 3, **caractérisé en ce que** les moyens d'agrégation locaux comportent en outre des moyens (30) d'interface avec au moins un capteur non vidéo (32) et qu'ils sont adaptés pour transmettre des images dudit détecteur vidéo aux moyens d'agrégation intermédiaires en réponse à un événement détecté par au moins un desdits capteurs non vidéo.

5. Système selon l'une quelconque des revendications 1 à 4, **caractérisé en ce que** des moyens d'agrégation locaux sont connectés à au moins deux moyens d'agrégation intermédiaires.

6. Système selon l'une quelconque des revendications précédentes, **caractérisé en ce que** des moyens d'agrégation intermédiaires sont mis en réserve pour permettre une configuration dynamique de la hiérarchie des liens entre les moyens d'agrégation locaux, intermédiaires et centraux.

## Patentansprüche

1. Überwachungssystem, umfassend mehrere Videodetektoren (7, 9, 11) und zentrale Aggregationsmittel (3), umfassend Mittel (62) zur Steuerung der Videodetektoren und Mittel (60) zum Anzeigen Bilder von einem oder mehreren der Videodetektoren kommenden, wobei das Überwachungssystem ferner lokale Aggregationsmittel (22) umfasst, die einem der Videodetektoren (11) zugeordnet sind, wobei die lokalen Aggregationsmittel (22) Mittel (26) zur Steuerung des Detektors umfassen,
**dadurch gekennzeichnet, dass** die zentralen Aggregationsmittel (3) Mittel (66) zum Analysieren der von einem oder mehreren der Videodetektoren kommenden Bilder umfassen,
dass das Überwachungssystem ferner dazwischenliegende Aggregationsmittel (5) umfasst, die mit einer Untergruppe der Videodetektoren und mit den zentralen Aggregationsmitteln verbunden sind und Fusionsmittel (52) umfassen, die geeignet sind, die Bilder von mindestens zwei Videodetektoren der Untergruppe von Videodetektoren zu analysieren und in Abhängigkeit vom Ergebnis der Analyse einen Alarm zu den zentralen Aggregationsmitteln auszulösen,
dass die lokalen Aggregationsmittel (22) Mittel (24) zum Analysieren der Bilder des Detektors umfassen, die geeignet sind, einen Alarm an die dazwischenliegenden Aggregationsmittel zu senden, und dass der Alarm von den dazwischenliegenden Aggregationsmitteln zu den zentralen Aggregationsmitteln weiterübertragen wird.

2. System nach Anspruch 1, **dadurch gekennzeichnet, dass** die dazwischenliegenden Aggregationsmittel (5) ferner Mittel (40, 46) zur Steuerung der Videodetektoren der Untergruppe von Videodetektoren umfassen, die geeignet sind, die von den Steuerungsmitteln (62) der zentralen Aggregationsmittel (3) empfangenen Steuerbefehle zu den Videodetektoren zu senden.

3. System nach Anspruch 1 oder 2, **dadurch gekennzeichnet, dass** die dazwischenliegenden Aggregationsmittel (5) geeignet sind, Bilder nur auf Anforderung der zentralen Aggregationsmittel oder in Verbindung mit dem Alarm an die zentralen Aggregationsmittel (3) zu übertragen.

4. System nach einem der Ansprüche 1 bis 3, **dadurch gekennzeichnet, dass** die lokalen Aggregationsmittel ferner Schnittstellenmittel (30) zu mindestens einem Nicht-Video-Sensor (32) umfassen und dass sie geeignet sind, Bilder des Videodetektors an die dazwischenliegenden Aggregationsmittel als Antwort auf ein Ereignis, das von mindestens einem der Nicht-Video-Sensoren detektiert wird, zu übertragen.

5. System nach einem der Ansprüche 1 bis 4, **dadurch gekennzeichnet, dass** lokale Aggregationsmittel mit mindestens zwei dazwischenliegenden Aggregationsmitteln verbunden sind.

6. System nach einem der vorhergehenden Ansprüche, **dadurch gekennzeichnet, dass** dazwischenliegende Aggregationsmittel in Reserve gehalten werden, um eine dynamische Konfiguration der Hierarchie der Verbindungen zwischen den lokalen, dazwischenliegenden und zentralen Aggregationsmitteln zu ermöglichen.

## Claims

1. Monitoring system comprising several video detectors (7, 9, 11) and central means (3) of aggregation comprising means (62) of control of the video detectors and means (60) of viewing images originating from one or more of the video detectors, the monitoring system furthermore comprising local means (22) of aggregation associated with one of the video detectors (11), the local means (22) of aggregation comprising means (26) of control of the said detector,
**characterized in that** the central means (3) of aggregation comprise means (66) of analysis of the images originating from one or more of the video detectors,
and **in that** the monitoring system furthermore comprises
intermediate means (5) of aggregation connected to a subset of the video detectors and to the central means of aggregation and comprising means (52) of fusion adapted to analyse the images of at least two video detectors of the subset of video detectors and to trigger an alarm to the central means of aggregation as a function of the result of the said analysis,
and **in that** the local means (22) of aggregation comprise means (24) of analysis of the images of the said detector which are adapted to dispatch an alarm to the intermediate means of aggregation, and **in that** the said alarm is retransmitted to the central means of aggregation by the intermediate means of aggregation.

2. System according to Claim 1, **characterized in that** the intermediate means (5) of aggregation furthermore comprise means (40, 46) of control of the video detectors of the subset of video detectors adapted to broadcast the commands received from the means of control (62) of the central means of aggregation (3) to the video detectors.

3. System according to Claim 1 or 2, **characterized in that** the intermediate means (5) of aggregation are adapted to transmit images to the central means (3) of aggregation only on request of the said central means of aggregation or in conjunction with the said alarm.

4. System according to any one of Claims 1 to 3, **characterized in that** the local means of aggregation furthermore comprise means (30) of interface with at least one non-video sensor (32) and that they are adapted to transmit images of the said video detector to the intermediate means of aggregation in response to an event detected by at least one of the said non-video sensors.

5. System according to any one of Claims 1 to 4, **characterized in that** local means of aggregation are connected to at least two intermediate means of aggregation.

6. System according to any one of the preceding claims, **characterized in that** intermediate means of aggregation are placed in reserve to allow dynamic configuration of the hierarchy of the links between the local, intermediate and central means of aggregation.
